# EUROPÄISCHE PATENTSCHRIFT

(11) **EP 4 257 344 B1**
(45) Veröffentlichungstag und Bekanntmachung des Hinweises auf die Patenterteilung: **17.06.2026**
(21) Anmeldenummer: 22166947.6
(22) Anmeldetag: 06.04.2022
(51) Int. Cl.: B29C 70/44, B29C 70/54, B29D 99/00, A63C 17/01, B32B 5/18, B29L 31/52

(54) **KOMPOSITBAUTEIL UND VERFAHREN ZU SEINER HERSTELLUNG**
COMPOSITE COMPONENT AND METHOD FOR THE PRODUCTION OF SAME
COMPOSANT COMPOSITE ET SON PROCÉDÉ DE FABRICATION

(43) Veröffentlichungstag der Anmeldung: 11.10.2023
(73) Patentinhaber: Kape GmbH, 4020 Linz (AT)
(72) Erfinder: KARACSONYI, Peter, 4020 Linz (AT); JAHN, Daniel, 5201 Seekirchen (AT)
(74) Vertreter: Weiser Voith Gugler Patentanwälte Partnerschaft

(56) Entgegenhaltungen:
- EP-A1- 1 162 058
- EP-B1- 2 714 376

## Beschreibung

Die vorliegende Erfindung betrifft ein Verfahren zur Herstellung eines Kompositbauteils, insbesondere für ein Gleitbrett, Rollbrett oder Skateboard, umfassend Einbringen einer Bodenmatte aus Verstärkungsfasern, darüber eines flächigen Kerns aus Kunststoff und über diesem einer Deckmatte aus Verstärkungsfasern in eine geöffnete Form, Schließen der Form, Einbringen einer nicht ausgehärteten Kunststoffmatrix in die geschlossenen Form, Aushärtenlassen der Kunststoffmatrix in der geschlossenen Form, Öffnen der Form und Entformen des Kompositbauteils. Die Erfindung betrifft ferner ein nach diesem Verfahren hergestelltes Kompositbauteil.

Derzeit werden Skateboards, Cruiser-Boards, Longboards, Snowboards, Bigfoots und andere Gleit- und Rollbretter, hier kurz "Boards" genannt, überwiegend aus verleimtem Schichtholz mit meist sieben unterschiedlichen Schichten hergestellt, teils auch mit Bambus- und Glas- bzw. Karbonfaser-Schichten. Die elastische Faserstruktur der Holzschichten verleiht dem Board innere Spannung und ein dynamisches Ansprechverhalten mit hoher linearer Elastizität, genannt "Pop", was für ambitionierte und professionelle Boarder unabdingbar ist. Aufgrund der individuellen Struktur von Holz weisen derartige Boards jedoch inhomogene mechanische Eigenschaften in der Serienfertigung auf und neigen zu Spannungs- bzw. Popverlust durch Alterung, Feuchtigkeitsaufnahme ("soggy board"), Abrieb ("razor tail") und Deformation. Wegen der geringen Zugfestigkeit von Holz können Holzboards überdies leicht brechen, was zu gefährlichen Unfällen führen kann. So beträgt die Lebensdauer von Holzskateboards im Profibereich beispielsweise nur ein bis zwei Tage. Die Herstellung von Holzboards ist auch überaus aufwendig, denn die Holz- und weiteren Schichten müssen verleimt, gepresst und anschließend manuell gefräst, gebohrt, gesägt und geschliffen werden.

Es wurde bereits mehrfach versucht, anstelle von Holz faserverstärkte Kunststoffe in Schichtbauweise für die Herstellung von Boards einzusetzen. So beschreibt beispielsweise die US 2006/0097469 A1 ein Skateboard mit einem Sandwich aus einem Kunststoffkern aus PVC und daran anliegenden Glasfasermatten, welches Sandwich in eine Kunststoffmatrix aus Epoxid-, Polyester- oder Polyurethanharzen eingebettet ist. Die Herstellung erfolgt in einem Reaktionsspritzguss-Verfahren, indem das Sandwich in eine Form eingebracht und dann das noch nicht ausgehärtete Harz eingespritzt wird, welches anschließend in der Form aushärtet. Bis auf einige Längsnuten an den Ober- und Unterseiten des Kerns, die das Durchtränken der Fasermatten beim Einspritzen des Harzes erleichtern sollen, liegen die Fasermatten direkt an den Ober- und Unterseiten des Kern an.

Aus der EP 2 714 376 B1 ist ein Kompositbauteil bekannt, bei welchem einem Kunststoff-Schaumkern möglichst schmale Rillen in einem Rautenmuster eingeritzt oder eingeprägt werden, durch welche das noch nicht ausgehärtete Harz eingepresst wird. Um einen leichten Bauteil herzustellen, soll möglichst wenig Harz verwendet werden, wozu die Rillen besonders schmal sind.

Das nach dem Verfahren der US 2006/0097469 A1 hergestellte Kunststoffboard und auch andere, meist durch Laminieren hergestellte Kunststoffboards (siehe z.B. FR 2772624 A1 und US 2006/0049596 A1) sind jedoch in Bezug auf ihr dynamisches Ansprechverhalten ("Pop") in keiner Weise mit Holzboards vergleichbar, sodass sie für professionelle Boarder nicht zufriedenstellend sind. Auch in anderen Anwendungen, z.B. in der Automobilindustrie oder im Bootsbau (siehe z.B. EP 2 714 376 B1), leiden die bekannten Kompositbauteile häufig an mangelnder Festigkeit und ausreichender Elastizität.

Die vorliegende Erfindung setzt sich zum Ziel, die Nachteile des genannten Standes der Technik zu überwinden und ein Kompositbauteil, insbesondere Gleitbrett, Rollbrett oder Skateboard, aus faserverstärktem Kunststoff zu schaffen, welches besonders widerstandsfähig ist, langlebiges dynamisches Ansprechverhalten bzw. Pop besitzt, geringes Gewicht hat und dabei auch in komplexen Formen einfach und kostengünstig hergestellt werden kann.

Dieses Ziel wird in einem ersten Aspekt der Erfindung mit einem Verfahren der eingangs genannten Art erreicht, welches sich dadurch auszeichnet, dass der Kern an seinen Unter- und Oberseiten mit einer Vielzahl von Abstandhalte-Noppen, deren gegenseitiger Abstand größer als ihr Durchmesser ist, versehen ist, welche die Boden- und Deckmatten in der geschlossenen Form in einem Abstand zu den Unter- und Oberseiten halten.

Die Erfindung beruht auf einem speziellen Reaktionsspritzguss-Verfahren, bei welchem ein mit Noppen ausgestatteter Kern in einem Sandwich aus Fasermatte, Kern und Fasermatte verwendet wird, wobei die Fasermatten an ihren dem Kern zugewandten Seiten von der Kunststoffmatrix unterspült sind, so sich dort eine Zwischenschicht aus der Kunststoffmatrix einstellt. Dabei fließt die Kunststoffmatrix in den Richtungen der Flächenerstreckung des Kerns ungehindert zwischen den Abstandhalte-Noppen hindurch entlang der Unter- und Oberseiten des Kerns und kann so die Boden- und Deckmatten auch großflächig benetzen. Das finale Sandwich besteht somit aus Fasermatte-in-Kunststoffmatrix, Kunststoffmatrix-Zwischenschicht, Kern, Kunststoffmatrix-Zwischenschicht und Fasermatte-in-Kunststoffmatrix, d.h. ist zumindest fünflagig, wobei die Höhe der Noppen die Dicke der Kunststoffmatrix-Zwischenschichten zwischen dem Kern und den Fasermatten bestimmt. Durch Variieren der Höhe der Abstandhalte-Noppen damit der Dichte der Zwischenschichten können die Festigkeit und Elastizität des Kompositbauteils optimal eingestellt und so z.B. ein Board mit ausgezeichnetem und langlebigem Pop erzielt werden.

Bevorzugt haben die Abstandhalte-Noppen eine Höhe von 0,5 - 2,5 mm, besonders bevorzugt von 1 - 2 mm. Dies ergibt eine dementsprechende Dicke der Kunststoffmatrix-Zwischenschichten zwischen dem Kern und den Boden- und Deckmatten. Diese Schichtdicke ergibt eine gute Kraftverteilung im Bauteil und damit insgesamt gute Festigkeit bei gleichzeitiger Elastizität.

Besonders günstig ist es, wenn die Abstandhalte-Noppen einen Durchmesser von 1 - 5 mm, bevorzugt 2 - 4 mm, haben. Die Abstandhalte-Noppen bilden dadurch nur kleine "Inseln" in den Kunststoff-Zwischenschichten zwischen dem Kern und den Boden- und Deckmatten.

In einer besonders bevorzugten Ausführungsform des erfindungsgemäßen Verfahrens ist der Kern an seinen Unter- und Oberseiten auch mit einigen Fixier-Noppen versehen, welche höher sind als die Abstandhalte-Noppen und beim Schließen der Form unter teilweisem Eindringen in die Boden- und Deckmatten letztere an die Form anpressen, um so das Sandwich aus Bodenmatte, Kern und Deckmatte während des Einbringens und Aushärtenlassens der Kunststoffmatrix in der Form zu fixieren.

Bevorzugt haben die Fixier-Noppen eine Höhe von 1 - 5 mm, besonders bevorzugt von 2 - 4 mm. Die Fixier-Noppen pressen dadurch die Boden- und Deckmatten, wenn diese z.B. eine Dicke von 5 - 10 mm haben, nur geringfügig zusammen bzw. dringen in diese nur geringfügig ein, was für die Fixierung des Sandwich in der Form ausreicht, ohne die Festigkeit und Elastizität des finalen Kompositbauteils signifikant zu beeinträchtigen.

Grundsätzlich kann der Kern aus jedem beliebigen Kunststoff gefertigt sein. Besonders günstig ist es jedoch, wenn der Kern aus Schaumstoff gefertigt ist, was ein besonders leichtgewichtiges Bauteil ergibt. Bevorzugt ist der Kern aus geschäumtem Polycaprolactam (Polyamid 6) gefertigt, was dem Kompositbauteil hohe Elastizität bei geringem Gewicht verleiht.

Die Kunststoffmatrix kann grundsätzlich aus jedem beliebigem, in der Form ("in situ") aushärtbarem Kunststoff gebildet sein, beispielsweise einem Zweikomponenten-Epoxidharz. Besonders günstig ist es, wenn die Kunststoffmatrix auf Caprolactam basiert, sodass sie nach dem Aushärten zu Polycaprolactam (Polyamid 6) polymerisiert und damit einen besonders innigen Verbund mit einem Schaumstoffkern eingehen kann, insbesondere einem Schaumstoffkern aus geschäumtem Polycaprolactam.

Gemäß einem weiteren bevorzugten Merkmal der Erfindung enthalten die Fasermatten Glas-, Kohle und/oder Polyamidfasern. Besonders günstig ist es, wenn die Fasermatten ausschließlich aus Polyamidfasern gefertigt sind, was besonders hohe Festigkeit und guten Pop verleiht. Diese Fasern können in Form von Vliesen, Gelegen, Geweben oder Gewirken als Matten vorliegen. Solche Fasermatten können insbesondere auch vorgeformt sein, um sie an die Ober- und Unterseiten des Kerns bestmöglich anzupassen, d.h. als sogenannte "Pre-Forms", welche z.B. dünne, thermoplastisch verformbare Polyamidfäden enthalten. Mithilfe solcher thermoplastischer Fäden können die Fasermatten unter Wärme vorverformt werden, bevor sie unter und über den Kern in die Form eingelegt werden.

In einem zweiten Aspekt schafft die Erfindung auch ein Kompositbauteil, insbesondere für ein Gleitbrett, Rollbrett oder Skateboard, mit einem Sandwich aus einer Bodenmatte aus Verstärkungsfasern, darüber einem flächigen Kern aus Kunststoff und über diesem einer Deckmatte aus Verstärkungsfasern, welches Sandwich in eine durch Reaktionsspritzguss gebildete Kunststoffmatrix eingebettet ist, wobei das Kompositbauteil sich gemäß der Erfindung dadurch auszeichnet, dass der Kern an seinen Unter- und Oberseiten mit einer Vielzahl von Abstandhalte-Noppen, deren gegenseitiger Abstand größer als ihr Durchmesser ist, versehen ist, welche die Boden- und Deckmatten in einem von der Kunststoffmatrix ausgefüllten Abstand zu den Unter- und Oberseiten halten.

Hinsichtlich seiner Vorteile und weiterer bevorzugter Ausgestaltungen des erfindungsgemäßen Kompositbauteils wird auf die obigen Ausführungen zum erfindungsgemäßen Verfahren verwiesen.

Die Erfindung wird nachstehend anhand von in den beigeschlossenen Zeichnungen dargestellten Ausführungsbeispielen näher erläutert. In den Zeichnungen zeigt:
Fig. 1 das Kompositbauteil (hier: ein Skateboard-Deck) der Erfindung in einer Perspektivansicht von unten;
Fig. 2 das Kompositbauteil und das Verfahren zu seiner Herstellung gemäß der Erfindung in einem ausschnittsweisen Schnitt durch die bestückte und geschlossene Reaktionsspritzguss-Form während der Herstellung;
Fig. 3 den Kern des Kompositbauteils der Fig. 1 und 2 in einer Perspektivansicht von schräg oben; und
Fig. 4 das Detail IV von Fig. 3 vergrößert.

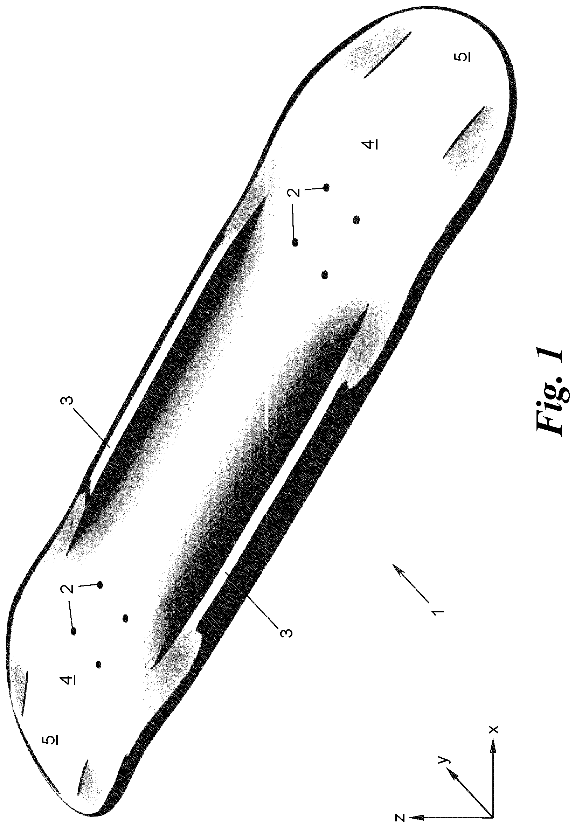

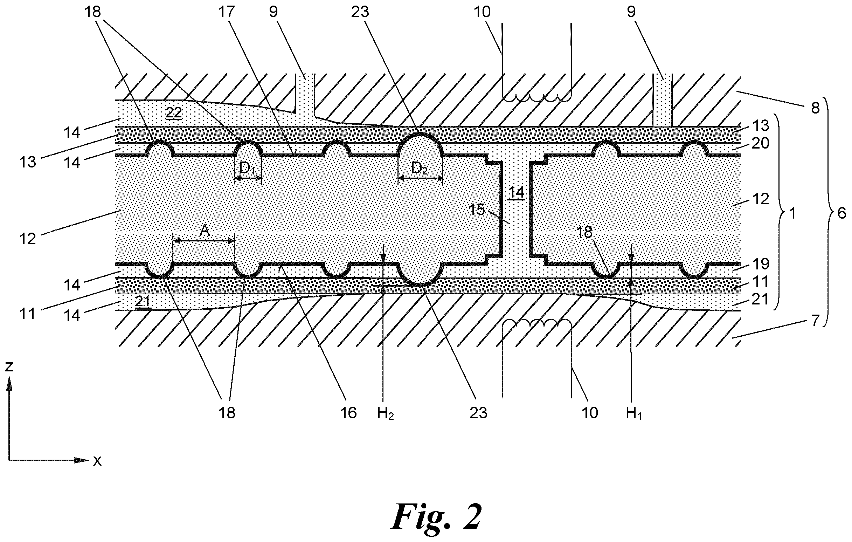

Fig. 1 zeigt ein beispielhaftes Kompositbauteil 1, das mit dem anhand der Fig. 2 - 4 erläuterten Verfahren hergestellt worden ist. Bei dem Kompositbauteil 1 kann es sich um ein beliebiges flächiges Bauteil handeln, also ein Bauteil mit einer ausgeprägten Flächenerstreckung (hier: in der x/y-Ebene). Es versteht sich, dass das Bauteil 1 nicht ebenflächig sein muss, es kann auch gekrümmt-flächig sein und insbesondere auch eine variierende Dicke normal zu seiner Flächenerstreckung, hier: in z-Richtung, haben.

Beispielsweise ist das Kompositbauteil 1 ein Karosserieteil in der Automobil- oder Luftfahrtindustrie, eine Bauplatte in der Bauindustrie od.dgl. Im gezeigten Beispiel ist das Kompositbauteil 1 ein Gleit- oder Rollbrett ("Board"), insbesondere ein Skateboard bzw. Skateboard-Deck mit Bohrungen 2 an seiner Unterseite zur Verankerung von Radsätzen (nicht gezeigt). Es könnte sich auch um jede andere Art von Board handeln, z.B. ein Cruiser-Board, Longboard, Snowboard, Monoski, Bigfoot od.dgl.

An der Unterseite des Kompositbauteils 1, hier: des Boards, können Gleitschienen ("slide rails") 3 ausgeformt oder ebene Auflageflächen 4 für Board-, Lip-, Nose- oder Tailslides eingeformt sein. Die Enden 5 können schaufelartig nach oben gekrümmt sein, um durch Tritt auf die Schaufeln springen zu können ("Ollie"). Die Oberseite des Boards kann für einen sicheren Halt konkave Bereiche haben.

Gemäß Fig. 2 wird das (hier nur ausschnittsweise im Schnitt gezeigte) Kompositbauteil 1 in einem speziellen Spritzguss-Verfahren erzeugt. Dazu wird eine Form 6 aus zwei Formhälften 7 (Matrize) und 8 (Pressstempel) verwendet, die geöffnet und geschlossen werden kann und über Angusskanäle 9 und optional eine Heizeinrichtung 10 verfügt, wie in der Technik bekannt.

In die geöffnete Form 6 wird zunächst ein Stapel bzw. Sandwich aus einer Bodenmatte 11, einem Kern 12 und einer Deckmatte 13 eingebracht. Dann wird die Form 6 geschlossen und über die Angusskanäle 9 eine noch nicht ausgehärtete Kunststoffmatrix 14 in die geschlossene Form 6 eingebracht. Das Einbringen kann dabei unter Druck oder drucklos (durch "Einfüllen" bzw. "Hineinrinnen Lassen") erfolgen, beides wird hier auch mit dem Begriff "Einspritzen" bezeichnet. Die noch nicht ausgehärtete Kunststoffmatrix 14 benetzt und durchtränkt dabei die Boden- und Deckmatten 11, 13 und füllt alle in der Form 6 verbleibenden Zwischenräume, einschließlich allfälliger Durchbrechungen 15 des Kerns 12. Anschließend wird die Kunststoffmatrix 14 in der Form 6 aushärten gelassen, gegebenenfalls unter entsprechender Temperierung der Form 6 mittels der Heizeinrichtungen 10.

Beim Aushärten der Kunststoffmatrix 14 polymerisiert diese zu einem starren Kunststoffpolymerisat. Nach dem Aushärtenlassen der Kunststoffmatrix 14 in der Form 6 wird letztere durch Trennen der Formhälften 7, 8 geöffnet und das fertige Kompositbauteil 1 aus der Form 6 entformt.

Das Herstellen eines Spritzgussgegenstandes, wie des Kompositbauteils 1, in einer Form 6 durch "in situ" Aushärtung einer Kunststoffmatrix 14 wird auch als Reaktionsspritzguss ("reaction injection molding", RIM, bzw. "resin transfer molding", RTM) bezeichnet. Alle in der Technik bekannten RIM- und RTM-Verfahrensparameter und -optionen können für die Durchführung des Reaktionsspritzgusses der Kunststoffmatrix 14 in der Form 6 verwendet werden.

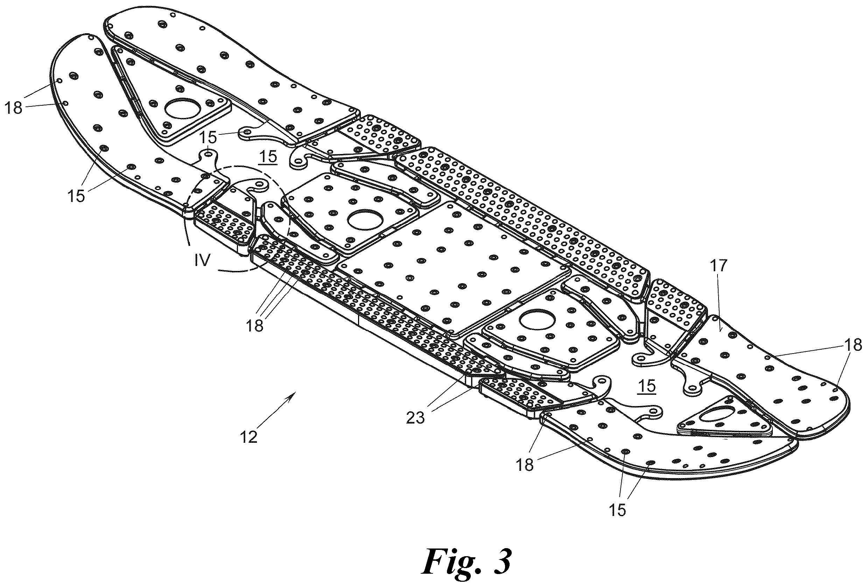

Der Kern 12 kann aus jedem beliebigen Kunststoff gefertigt werden, z.B. einem duroplastischen oder thermoplastischen Kunststoff aus Polyurethan, Polycarbonat oder Polyamid (PA), insbesondere PA6, PA11 oder PA12. Der Kern 12 kann ein Voll- oder Hohlkern sein und optional mit einer Vielzahl von Durchbrechungen 15, insbesondere in z-Richtung, versehen sein, wie in Fig. 3 gezeigt.

Für einen besonders leichtgewichtigen Kern 12 kann dieser aus geschäumtem Kunststoff ("Schaumstoff") gefertigt werden, z.B. geschäumtem Polycaprolactam (Polyamid 6, PA6). Der Kern 12 kann auch aus mehr als einem Kunststoff bestehen, z.B. aus einem Harzkunststoff für mechanische Stabilität, gefüllt mit einem geschäumten Kunststoff, optional versehen mit Durchbrechungen 15.

Die Boden- und Deckmatten 11, 13 sind jeweils ein- oder mehrlagige Vliese, Gelege, Gewebe oder Gewirke aus Verstärkungsfasern, die mit der Kunststoffmatrix 14 benetzbar und tränkbar sind, beispielsweise aus Glasfasern, Karbonfasern, Aramidfasern, Basaltfasern, Flachsfasern, Polyamidfasern oder Kombinationen daraus. In einer optionalen Ausführungsform sind die Boden- und Deckmatten 11, 13 ausschließlich aus Polyamidfasern gefertigt.

Die Fasern können in den Boden- und Deckmatten 11, 13 uni-, bi- oder multidirektional verlegt sein, auch in verschiedenen Lagen in unterschiedlichen Richtungen. Die Boden- und Deckmatten 11, 13 können optional aus mehreren - gegebenenfalls auch mit gegenseitigen Abständen - nebeneinanderliegenden Teilen ("Patches") zusammengesetzt sein, wobei in einer mehrlagigen Boden- oder Deckmatte 11, 13 auch nur einzelne Lagen durch solche Patches gebildet sein können.

Die Boden- und Deckmatten 11, 13 können zusätzlich auch einige dünne thermoplastische Fäden enthalten, z.B. Polyamidfäden, welche eine thermische Vor-Verformung der Boden- und Deckmatten 11, 13 durch Erwärmen, Verformen und wieder Abkühlen gestatten, um sie bereits vorab an eine allfällige Oberflächenkrümmung des Kerns 12 vor-anzupassen.

Die Kunststoffmatrix 14 kann aus einem beliebigen duroplastischen oder thermoplastischen Kunststoff sein, der für einen Reaktionsspritzguss geeignet ist, beispielsweise ein Zweikomponenten-Kunstharz niedriger Viskosität, das nach dem Einbringen in die Form 6 darin aushärtet. Beispielsweise basiert die Kunststoffmatrix 14 auf Polyurethan oder Epoxidharz. Eine besonders geeignete Basis für die Kunststoffmatrix 14 ist Caprolactam (Polyamid 6), welches durch entsprechende Aktivierung, beispielsweise ringöffnende Polymerisation durch Beifügung von Wasser ("hydrolytische Ringöffnung"), zu Polycaprolactam vernetzt.

Eine Kunststoffmatrix 14 auf Basis von Caprolactam eignet sich besonders zur Verwendung mit einem Kern 12 aus geschäumtem Polycaprolactam, weil sich durch die Materialgleichheit von Kern 12 und Kunststoffmatrix 14 ein besonders inniger Verbund des Kompositbauteils 1 ergibt.

Wie in den Fig. 2 bis 4 gezeigt, ist der Kern 12 an seiner Unterseite 16 oder Oberseite 17, insbesondere sowohl an der Unterseite 16 als auch an der Oberseite 17, jeweils mit einer Vielzahl von Abstandhalte-Noppen 18 versehen. Die Abstandhalte-Noppen 18 halten die Boden- und Deckmatten 11, 13 beim Bilden des Sandwich 11 - 13 in einem Abstand H₁ zur Unter- bzw. Oberseite 16, 17 des Kerns 12. Beim Einbringen der nicht ausgehärteten Kunststoffmatrix 14 in die Form 6 wird auch dieser Abstand H₁ vollständig mit Kunststoffmatrix 14 ausgefüllt und ergibt dadurch im fertigen Kompositbauteil 1 jeweils eine Zwischenschicht 19 bzw. 20 zwischen der Bodenmatte 11 und dem Kern 12 bzw. dem Kern 12 und der Deckmatte 13. Das Kompositbauteil 1 wird dadurch zu einem Verbundbauteil aus mindestens fünf Schichten (11, 19, 12, 20, 13).

Wie in Fig. 2 gezeigt, kann die Form 6 auch unterhalb der Bodenmatte 11 und oberhalb der Deckmatte 13 Formhohlräume bzw. Rücksprungbereiche aufweisen, welche zu zusätzlichen Kunststoffmatrix-Schichten 21, 22 unter bzw. über den Boden- und Deckmatten 11, 13 führen, sodass das Kompositbauteil 1 auch sechs- bzw. siebenschichtig sein kann. Die Schichten 21, 22 können beispielsweise zur integralen Ausformung der Gleitschienen 3 verwendet werden.

Der Abstand H₁ und damit die Dicke der Kunststoffmatrix-Schichten 19, 20 ist gleich der Höhe der Abstandhalte-Noppen 18, d.h. wie weit sie von der jeweiligen Unter- bzw. Oberseite 16, 17 des Kerns 12 vorragen. Durch entsprechende Wahl der Höhe H₁ der Abstandhalte-Noppen 18 und damit der Dicke der Schichten 19, 20 können somit die Festigkeits- und Elastizitätseigenschaften des Kompositbauteils 1 variiert werden. Für die Fertigung eines Skateboards mit einer Länge von z.B. 60 - 80 cm sind beispielsweise Abstandhalte-Noppen 18 mit einer Höhe H₁ von 0,5 bis 2,5 mm geeignet, bevorzugt 1 - 2 mm, besonders bevorzugt etwa 1 mm.

Der Durchmesser D₁ der Abstandhalte-Noppen 18 und ihr gegenseitiger (minimaler) Abstand A auf der Unter- bzw. Oberseite 16, 17 wird so gewählt, dass ein ungehindertes Passieren der nicht ausgehärteten Kunststoffmatrix 14 beim Einbringen in den Zwischenraum zwischen dem Kern 12 und den Boden- und Deckmatten 11, 13 gewährleistet ist. Die Höhe H₁, der Durchmesser D₁ und der minimale Abstand A der Abstandhalte-Noppen 18 wird ferner entsprechend dem gewünschten Verhältnis von Kern-Material der Abstandhalte-Noppen 18 zu Kunststoffmatrix-Material der Zwischenschichten 19, 20 gewählt, damit die gewünschten Festigkeits- und Elastizitätseigenschaften des fertigen Kompositbauteils 1 erreicht werden. Für ein Skateboard mit einer Länge von z.B. 60 - 80 cm haben die Abstandhalte-Noppen 18 beispielsweise einen Durchmesser D₁ von 1 - 5 mm, bevorzugt 2 - 4 mm, besonders bevorzugt etwa 2 mm, und ihr gegenseitiger minimaler Abstand A ist größer als ihr Durchmesser D₁, beispielsweise mindestens das Ein- bis Zweifache ihres Durchmessers D₁.

Es versteht sich, dass die Abstandhalte-Noppen 18 jede beliebige Querschnittsform in der Draufsicht haben könnnen, sei es rund (wie dargestellt), oval, rechteckig, quadratisch, fünfeckig, sechseckig, beliebig polygonal od.dgl. Auch in der Seitenansicht können sie jede beliebige Querschnittsform haben, z.B. kreisbogenförmig (wie dargestellt), dreieckig, trapezförmig, rechteckig, quadratisch usw. Allgemein gesprochen können sie kuppelförmig (wie dargestellt), pyramidenförmig, pyramidenstumpfförmig, kegelförmig, kegelstumpfförmig, zylindrisch, prismatisch od.dgl. sein. Wie aus Fig. 3 ersichtlich können die Abstandhalte-Noppen 18 auch ungleichmäßig über die jeweilige Unter- bzw. Oberseite 16, 17 verteilt sein, z.B. dichter in Rand- oder aufgewölbten Bereichen des Kompositbauteils 1 und schütterer in Mitten- oder vertieften Bereichen des Kompositbauteils 1.

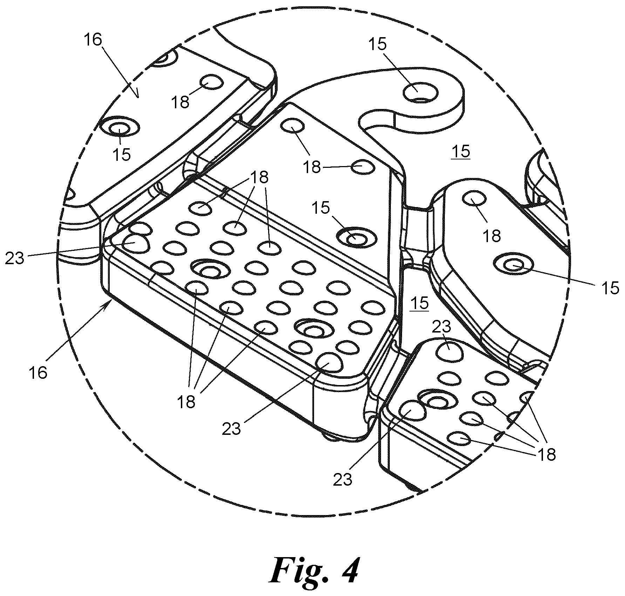

Gemäß den Fig. 2 und 4 kann der Kern 12 an seinen Unter- und/oder Oberseiten 16, 17 optional mit mehreren verteilten Fixier-Noppen 23 versehen sein. Die Fixier-Noppen 23 haben eine größere Höhe H₂ als die Höhe H₁ der Abstandhalte-Noppen 18. Wenn die Fixier-Noppen 23 an solchen Stellen der Unter- und Oberseiten 16, 17 angeordnet sind, wo die Form 6 keine von den Boden- und Deckmatten 11, 13 zurückspringenden Bereiche für die Ausbildung von Schichten 21, 22 hat, dann dringen die Fixier-Noppen 23 beim Schließen der Form 6 teilweise in die Boden- und Deckmatten 11, 13 ein, d.h. komprimieren diese dort lokal, siehe Fig. 2. Damit wird das Sandwich aus Bodenmatte 11, Kern 12 und Deckmatte 13 dort zwischen den Formhälften 7, 8 gepresst und so während der Einbringens und Aushärtenlassens der Kunststoffmatrix 14 in der Form 6 gegen Verrutschen fixiert.

Auch die Fixier-Noppen 23 können - so wie die Abstandhalte-Noppen 18 - jeden beliebigen Querschnitt in der Draufsicht und der Seitenansicht haben und z.B. kuppelförmig (wie dargestellt), pyramidenförmig, pyramidenstumpfförmig, kegelförmig, kegelstumpfförmig, zylindrisch, prismatisch od.dgl. sein.

Für ein Skateboard mit einer Länge von z.B. 60 - 80 cm haben die Fixier-Noppen 23 beispielsweise eine Höhe H₂ von 1 - 5 mm, bevorzugt 2 - 4 mm, besonders bevorzugt etwa 2 mm. Die Fixier-Noppen 23 haben einen entsprechend größeren Durchmesser D₂, beispielsweise von 1 - 10 mm, bevorzugt 3 - 6 mm, besonders bevorzugt etwa 4 mm.

Es versteht sich, dass bei größeren Kompositbauteilen 1 die Höhen H₁, H₂, die Durchmesser D₁, D₂ und der Abstand A der Abstandhalte- und Fixier-Noppen 18, 23 entsprechend mitskaliert werden können.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Verfahren zur Herstellung eines Kompositbauteils (1), insbesondere für ein Gleitbrett, Rollbrett oder Skateboard, umfassend Einbringen einer Bodenmatte (11) aus Verstärkungsfasern, darüber eines flächigen Kerns (12) aus Kunststoff und über diesem einer Deckmatte (13) aus Verstärkungsfasern in eine geöffnete Form (6), Schließen der Form (6), Einbringen einer nicht ausgehärteten Kunststoffmatrix (14) in die geschlossenen Form (6), Aushärtenlassen der Kunststoffmatrix (14) in der geschlossenen Form (6), Öffnen der Form (6) und Entformen des Kompositbauteils (1), **dadurch gekennzeichnet, dass** der Kern (12) an seinen Unter- und Oberseiten (16, 17) mit einer Vielzahl von Abstandhalte-Noppen (18), deren gegenseitiger Abstand (A) größer als ihr Durchmesser (D₁) ist, versehen ist, welche die Boden- und Deckmatten (11, 12) in der geschlossenen Form (6) in einem Abstand (H₁) zu den Unter- und Oberseiten (16, 17) halten.

2. Verfahren nach Anspruch 1, **dadurch gekennzeichnet, dass** die Abstandhalte-Noppen (18) eine Höhe (H₁) von 0,5 - 2,5 mm haben, bevorzugt von 1 - 2 mm.

3. Verfahren nach Anspruch 1 oder 2, **dadurch gekennzeichnet, dass** die Abstandhalte-Noppen (18) einen Durchmesser (D₁) von 1 - 5 mm, bevorzugt 2 - 4 mm, haben.

4. Verfahren nach einem der Ansprüche 1 bis 3, **dadurch gekennzeichnet, dass** der Kern (12) an seinen Unter- und Oberseiten (16, 17) auch mit einigen Fixier-Noppen (23) versehen ist, welche höher sind als die Abstandhalte-Noppen (18) und beim Schließen der Form (6) unter teilweisem Eindringen in die Boden- und Deckmatten (11, 12) letztere an die Form (6) anpressen, um so das Sandwich aus Bodenmatte (11), Kern (12) und Deckmatte (13) während des Einbringens und Aushärtenlassens der Kunststoffmatrix (14) in der Form (6) zu fixieren.

5. Verfahren nach Anspruch 4, **dadurch gekennzeichnet, dass** die Fixier-Noppen (23) eine Höhe (H₂) von 1 - 5 mm haben, bevorzugt von 2 - 4 mm.

6. Verfahren nach einem der Ansprüche 1 bis 5, **dadurch gekennzeichnet, dass** der Kern (12) aus Schaumstoff gefertigt ist, bevorzugt aus geschäumtem Polycaprolactam.

7. Verfahren nach einem der Ansprüche 1 bis 6, **dadurch gekennzeichnet, dass** die Kunststoffmatrix (14) auf Caprolactam basiert.

8. Verfahren nach einem der Ansprüche 1 bis 7, **dadurch gekennzeichnet, dass** die Fasermatten (11, 13) Glas-, Kohle- und/oder Poyamidfasern enthalten, bevorzugt ausschließlich aus Polyamidfasern gefertigt sind.

9. Kompositbauteil, insbesondere für ein Gleitbrett, Rollbrett oder Skateboard, mit einem Sandwich aus einer Bodenmatte (11) aus Verstärkungsfasern, darüber einem flächigen Kern (12) aus Kunststoff und über diesem einer Deckmatte (13) aus Verstärkungsfasern, welches Sandwich in eine durch Reaktionsspritzguss gebildete Kunststoffmatrix (14) eingebettet ist, **dadurch gekennzeichnet, dass** der Kern (12) an seinen Unter- und Oberseiten (16, 17) mit einer Vielzahl von Abstandhalte-Noppen (18), deren gegenseitiger Abstand (A) größer als ihr Durchmesser (D₁) ist, versehen ist, welche die Boden- und Deckmatten (11, 12) in einem von der Kunststoffmatrix (14) ausgefüllten Abstand (H₁) zu den Unter- und Oberseiten (16, 17) halten.

10. Kompositbauteil nach Anspruch 9, **dadurch gekennzeichnet, dass** die Abstandhalte-Noppen (18) eine Höhe (H₁) von 0,5 - 2,5 mm haben, bevorzugt von 1 - 2 mm.

11. Kompositbauteil nach Anspruch 9 oder 10, **dadurch gekennzeichnet, dass** der Kern (12) an seinen Unter- und Oberseiten (16, 17) auch mit einigen Fixier-Noppen (23) versehen ist, welche höher sind als die Abstandhalte-Noppen (18) und teilweise in die Boden- und Deckmatten (11, 12) eindringen.

12. Kompositbauteil nach einem der Ansprüche 9 bis 11, **dadurch gekennzeichnet, dass** der Kern (12) aus Schaumstoff gefertigt ist, bevorzugt aus geschäumtem Polycaprolactam.

13. Kompositbauteil nach einem der Ansprüche 9 bis 12, **dadurch gekennzeichnet, dass** die Kunststoffmatrix (14) auf Caprolactam basiert.

14. Kompositbauteil nach einem der Ansprüche 9 bis 13, **dadurch gekennzeichnet, dass** die Fasermatten (11, 13) Glas-, Kohle und/oder Polyamidfasern enthalten, bevorzugt ausschließlich aus Polyamidfasern gefertigt sind.

15. Kompositbauteil nach einem der Ansprüche 9 bis 14, **dadurch gekennzeichnet, dass** der Kern (12) eine Vielzahl an von der Kunststoffmatrix (14) ausgefüllten Durchbrechungen (15) aufweist.

## Claims

1. A method for producing a composite component (1), in particular for a gliding board, roller board or skateboard, said method comprising introducing a bottom mat (11) made of reinforcing fibres, above this a flat core (12) made of plastic, and above this a top mat (13) made of reinforcing fibres into an opened mould (6), closing the mould (6), introducing an uncured plastics matrix (14) into the closed mould (6), allowing the plastics matrix (14) to cure in the closed mould (6), opening the mould (6), and demoulding the composite component (1), **characterised in that** the core (12) is provided on its lower and upper sides (16, 17) with a plurality of spacer nubs (18) whose mutual spacing (A) is greater than their diameter (D₁) and which keep the bottom and top mats (11, 12) in the closed mould (6) at a distance (H₁) from the lower and upper sides (16, 17).

2. The method according to claim 1, **characterised in that** the spacer nubs (18) have a height (H₁) of 0.5 - 2.5 mm, preferably of 1 - 2 mm.

3. The method according to claim 1 or 2, **characterised in that** the spacer nubs (18) have a diameter (D₁) of 1 - 5 mm, preferably 2 - 4 mm.

4. The method according to any one of claims 1 to 3, **characterised in that** the core (12) is also provided on its lower and upper sides (16, 17) with some fixing nubs (23) which are higher than the spacer nubs (18) and, when the mould (6) is closed, partially penetrate into the bottom and top mats (11, 12) and press the latter against the mould (6) so as to fix the sandwich formed of bottom mat (11), core (12) and top mat (13) in the mould (6) during the introducing and curing of the plastics matrix (14).

5. The method according to claim 4, **characterised in that** the fixing nubs (23) have a height (H₂) of 1 - 5 mm, preferably of 2 - 4 mm.

6. The method according to any one of claims 1 to 5, **characterised in that** the core (12) is made of foam, preferably of foamed polycaprolactam.

7. The method according to any one of claims 1 to 6, **characterised in that** the plastics matrix (14) is based on caprolactam.

8. The method according to any one of claims 1 to 7, **characterised in that** the fibre mats (11, 13) contain glass, carbon and/or polyamide fibres, preferably are made exclusively from polyamide fibres.

9. A composite component, in particular for a gliding board, roller board or skateboard, comprising a sandwich formed of a bottom mat (11) made of reinforcing fibres, above this a flat core (12) made of plastic, and above this a top mat (13) made of reinforcing fibres, the sandwich being embedded in a plastics matrix (14) formed by reaction injection moulding, **characterised in that** the core (12) is provided on its lower and upper sides (16, 17) with a plurality of spacer nubs (18) whose mutual spacing (A) is greater than their diameter (D₁) and which hold the bottom and top mats (11, 12) at a distance (H₁) from the lower and upper sides (16, 17), which distance is filled by the plastics matrix (14).

10. The composite component according to claim 9, **characterised in that** the spacer nubs (18) have a height (H₁) of 0.5 - 2.5 mm, preferably of 1 - 2 mm.

11. The composite component according to claim 9 or 10, **characterised in that** the core (12) is also provided on its lower and upper sides (16, 17) with some fixing nubs (23) which are higher than the spacer nubs (18) and penetrate partially into the bottom and top mats (11, 12).

12. The composite component according to any one of claims 9 to 11, **characterised in that** the core (12) is made of foam, preferably of foamed polycaprolactam.

13. The composite component according to any one of claims 9 to 12, **characterised in that** the plastics matrix (14) is based on caprolactam.

14. The composite component according to any one of claims 9 to 13, **characterised in that** the fibre mats (11, 13) contain glass, carbon and/or polyamide fibres, preferably are made exclusively from polyamide fibres.

15. The composite component according to any one of claims 9 to 14, **characterised in that** the core (12) has a plurality of apertures (15) filled by the plastics matrix (14).

## Revendications

1. Procédé de fabrication d'un composant composite (1), en particulier pour une planche de glisse, une planche à roulettes ou un skateboard, ledit procédé comprenant l'introduction d'un mat de base (11) en fibres de renforcement, au-dessus d'un noyau plat (12) en matière plastique et au-dessus de celui-ci d'un mat de couverture (13) en fibres de renforcement dans un moule ouvert (6), la fermeture du moule (6), l'introduction d'une matrice en matière plastique non durcie (14) dans le moule fermé (6), le durcissement de la matrice en matière plastique (14) dans le moule fermé (6), l'ouverture du moule (6) et le démoulage du composant composite (1), **caractérisé en ce que** le noyau (12) est pourvu sur ses faces inférieure et supérieure (16, 17) d'une pluralité de boutons d'espacement (18) dont l'espacement mutuel (A) est supérieur à leur diamètre (D₁), qui maintiennent les mats de base et de couverture (11, 12) dans le moule fermé (6) à un espacement (H₁) par rapport aux faces inférieure et supérieure (16, 17).

2. Procédé selon la revendication 1, **caractérisé en ce que** les boutons d'espacement (18) ont une hauteur (H₁) de 0,5 à 2,5 mm, de préférence de 1 à 2 mm.

3. Procédé selon la revendication 1 ou 2, **caractérisé en ce que** les boutons d'espacement (18) ont un diamètre (D₁) de 1 à 5 mm, de préférence de 2 à 4 mm.

4. Procédé selon l'une quelconque des revendications 1 à 3, **caractérisé en ce que** le noyau (12) est également pourvu sur ses faces inférieure et supérieure (16, 17) de quelques boutons de fixation (23) qui sont plus hauts que les boutons d'espacement (18) et qui, lors de la fermeture du moule (6), sous pénétration partielle dans les mats de base et de couverture (11, 12), pressent ces dernières contre le moule (6) afin de fixer ainsi le sandwich du mat de base (11), du noyau (12) et du mat de couverture (13) pendant l'introduction et le durcissement de la matrice en matière plastique (14) dans le moule (6).

5. Procédé selon la revendication 4, **caractérisé en ce que** les boutons de fixation (23) ont une hauteur (H₂) de 1 à 5 mm, de préférence de 2 à 4 mm.

6. Procédé selon l'une quelconque des revendications 1 à 5, **caractérisé en ce que** le noyau (12) est fabriqué en mousse, de préférence en mousse de polycaprolactame.

7. Procédé selon l'une quelconque des revendications 1 à 6, **caractérisé en ce que** la matrice en matière plastique (14) est à base de caprolactame.

8. Procédé selon l'une quelconque des revendications 1 à 7, **caractérisé en ce que** les mats fibreux (11, 13) contiennent des fibres de verre, de carbone et/ou de polyamide, de préférence sont fabriquées exclusivement en fibres de polyamide.

9. Composant composite, en particulier pour une planche de glisse, une planche à roulettes ou un skateboard, comprenant un sandwich constitué d'un mat de base (11) en fibres de renforcement, au-dessus d'un noyau plat (12) en matière plastique et au-dessus de celui-ci d'un mat de couverture (13) en fibres de renforcement, ledit sandwich étant integré dans une matrice en matière plastique (14) formée par moulage par injection-réaction, **caractérisé en ce que** le noyau (12) est pourvu sur ses faces inférieure et supérieure (16, 17) d'une pluralité de boutons d'espacement (18) dont l'espacement mutuel (A) est supérieur à leur diamètre (D₁), qui maintiennent les mats de base et de couverture (11, 12) à un espacement (H₁) rempli par la matrice en matière plastique (14) par rapport aux faces inférieure et supérieure (16, 17).

10. Composant composite selon la revendication 9, **caractérisé en ce que** les boutons d'espacement (18) ont une hauteur (H₁) de 0,5 à 2,5 mm, de préférence de 1 à 2 mm.

11. Composant composite selon la revendication 9 ou 10, **caractérisé en ce que** le noyau (12) est également pourvu sur ses faces inférieure et supérieure (16, 17) de quelques boutons de fixation (23) qui sont plus hauts que les boutons d'espacement (18) et qui pénètrent partiellement dans les mats de base et de couverture (11, 12).

12. Composant composite selon l'une quelconque des revendications 9 à 11, **caractérisé en ce que** le noyau (12) est fabriqué en mousse, de préférence en mousse de polycaprolactame.

13. Composant composite selon l'une quelconque des revendications 9 à 12, **caractérisé en ce que** la matrice en matière plastique (14) est à base de caprolactame.

14. Composant composite selon l'une quelconque des revendications 9 à 13, **caractérisé en ce que** les mats fibreux (11, 13) contiennent des fibres de verre, de carbone et/ou de polyamide, de préférence sont fabriquées exclusivement en fibres de polyamide.

15. Composant composite selon l'une quelconque des revendications 9 à 14, **caractérisé en ce que** le noyau (12) présente une pluralité de perforations (15) remplies par la matrice en matière plastique (14).
